(19) Europäisches Patentamt
European Patent Office
Office européen des brevets

(11) **EP 4 741 451 A1**

(12) **EUROPEAN PATENT APPLICATION**

(43) Date of publication:
**13.05.2026 Bulletin 2026/20**

(21) Application number: **24306895.4**

(22) Date of filing: **12.11.2024**

(51) International Patent Classification (IPC):
***C08J 11/10*** *(2006.01)*

(52) Cooperative Patent Classification (CPC):
**C08J 11/105**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Centre National de la Recherche Scientifique**
  **75016 Paris (FR)**
- **Institut National de la Recherche pour l'Agriculture, l'Alimentation et l'Environnement**
  **75007 Paris (FR)**
- **UNIVERSITE DE BORDEAUX**
  **33000 Bordeaux (FR)**
- **Institut Polytechnique de Bordeaux**
  **33400 Talence (FR)**
- **Université d'Aix Marseille**
  **13007 Marseille (FR)**

(72) Inventors:
- **BISSARO, Bastien**
  **13009 MARSEILLE (FR)**
- **TATON, Daniel**
  **33610 CESTAS (FR)**
- **PUJOL, Manon**
  **33600 PESSAC (FR)**
- **ALMEIDA GONSALES, Stella**
  **PRAGUE (CZ)**

(74) Representative: **Jacobacci & Partners France**
**32, rue de l'Arcade**
**75008 Paris (FR)**

Remarks:
The complete document including Reference Table(s) and the Sequence Listing(s) can be downloaded from the EPO website

(54) **METHOD FOR DEGRADING A VINYL POLYMER**

(57) A method for degrading a vinyl polymer having an initial molar mass in order to form at least one degradation product having a final molar mass lower than the initial molar mass comprises a) providing a water-based emulsion of the vinyl polymer; b) mixing the water-based emulsion with at least one enzyme-mediator system to obtain a reaction mixture, said at least one enzyme-mediator system comprising at least one multi-copper oxidase chosen among a laccase, a laccase-ferroxidase, a laccase-like multi-copper oxidase or a mixture thereof, and at least one respective mediator, said at least one multi-copper oxidase and said at least one respective mediator being mixed sequentially with the water-based emulsion or provided as a pre-mix preserved under anaerobic conditions, until being mixed with the water-based emulsion; c) stirring the reaction mixture under an atmosphere comprising dioxygen; and d) recovering the at least one degradation product of the vinyl polymer.

EP 4 741 451 A1

## Description

### TECHNICAL FIELD OF THE INVENTION

The invention relates to biotechnological methods for recycling synthetic polymers and more particularly to a method for degrading a vinyl polymer and to a corresponding kit-of-parts.

### BACKGROUND OF THE INVENTION

Plastic polymers are inexpensive and robust materials that can be used in a wide variety of applications, as among others packaging, insulation materials for the construction industry and electronics.

However, due to their low biodegradability, some synthetic polymers induce pollution that may damage the environment and/or human health and impact the ecological cycle.

Vinyl polymers, such as polyethylene (PE), polypropylene (PP), polyvinylchloride (PVC) or polystyrene (PS), are in particular implemented in single-use products and thus contribute to plastic pollution. Notably, PS is one of the most common polymers used to make plastics, the global PS market stood at approximately 11 million tons in 2022 and is expected to grow at a steady CAGR of 6.02% during the forecast period until 2030.

The transformation or modification of vinyl polymers, at the design stage or after use, in view of their recycling, is to date mainly limited to physicochemical and/or mechanical processes on an industrial scale.

Mechanical methods for plastics recycling most often require important amounts of energy and lead to recycled polymers of lower quality than virgin polymers.

Hence, there is a need for efficient methods enabling the recycling of vinyl polymers under low-energy consumption and/or eco-friendly conditions.

Academic research has brought out biotechnological methods for recycling synthetic polymers, these methods exploiting the potential of enzymes and microorganisms.

The article Biodegradation of polyethylene and polystyrene: From microbial deterioration to enzyme discovery, Y. Zhang et al., Biotechnology Advances, Volume 60, 2022, 107991, ISSN 0734-9750, reviews fungi species allowing biodegradation of PS. This article highlights that the hydrophobic nature of polystyrene still limits the efficiency of its enzymatic degradation.

The article Investigation of Abortiporus biennis lignocellulolytic toolbox, and the role of laccases in polystyrene degradation, A. Zerva et al., Chemosphere, Volume 312, Part 1, 2023, 137338, ISSN 0045-6535, describes the effect of a laccase from the white rot fungus *Abortiporus biennis* on a polystyrene powder. A decrease of the number average molar mass (Mn) and mass average molar mass (Mw) of 19.7% $\pm$ 2.9% and 7.7 $\pm$ 1.5%, respectively, which corresponds to only a 1.2-fold decrease of Mn, is described in this article. Such a decrease is clearly insufficient for solving the technical problem of PS recycling. Furthermore, this article provides very little insights, on how to operate the enzymatic system as the reaction parameters were not investigated.

Hence, the aim of the invention is to provide a method allowing further degradation of a vinyl polymer that can be upcycled and/or recycled, with low energy consumption and low environmental impact, and that can be implemented at an industrial scale, in order to form degradation products of added value.

### SUMMARY OF THE INVENTION

To this end, the invention relates to a method for degrading a vinyl polymer having an initial molar mass in order to form at least one degradation product having a final molar mass lower than the initial molar mass, the method comprising the following steps:

a) providing a water-based emulsion of the vinyl polymer;
b) mixing the water-based emulsion with at least one enzyme-mediator system to obtain a reaction mixture,

said at least one enzyme-mediator system comprising:

- at least one multi-copper oxidase chosen among a laccase, a laccase-ferroxidase, a laccase-like multi-copper oxidase or a mixture thereof, and
- at least one mediator,

said at least one multi-copper oxidase and said at least one respective mediator being:

- mixed sequentially with the water-based emulsion, or

- provided as a pre-mix preserved under anaerobic conditions, until being mixed with the water-based emulsion;

c) stirring the reaction mixture under an atmosphere comprising dioxygen; and
d) recovering the at least one degradation product of the vinyl polymer.

The inventors have observed that the provision of the vinyl polymer in the form of a water-based emulsion or equivalently in the form of a polymer latex, and the mixing of said water-based emulsion with, sequentially or as a pre-mix under anaerobic conditions, a multi-copper oxidase chosen among a laccase, a laccase-ferroxidase and a laccase-like multi-copper oxidase or a mixture thereof, and an mediator, allows achieving extensive degradation of the initial vinyl polymer, and in particular of PS.

In particular, as specified later, the relative variation of molar mass between the initial polymer and any of the at least one degradation product can reach up from 10 to, but not including, 100%, more preferably 50 to, but not including, 100%, even more preferably 90 to, but not including, 100%.

"Not including, 100%" means that the maximum relative variation of molar mass can approach but does not actually reach 100%.

In particular, the relative variation of molar mass between the initial polymer and any of the at least one degradation product can reach up to 99.99%, or, the relative variation is lower than 100%, i.e. 100% is excluded.

In the method according to the present invention, the vinyl polymer is obtained by polymerization or copolymerization of vinylic monomers of formulae

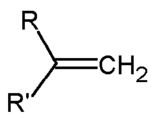

wherein

R is independently selected from H or $CH_3$ or a $CF_3$,
R' is independently selected from:

- an atom chosen among H, F, Cl, Br, or I,
- a linear or branched alkyl from 1 to 10 carbon optionally substituted by one or more -COOH group,
- a group -COOH,
- a group -COOR" wherein R" is a linear or branched $C_1$-$C_{10}$ alkyl group optionally substituted by a group OH,
- an optionally substituted benzyl group or a substituted phenyl group where said substituents are selected from H, F, Cl, Br, I or a $C_1$-$C_6$ linear or a branched alkyl,
- O-$C_1$-$C_6$alkyl group or a group-COH, or a group -COOH, or a group -COOR",
- a group -$NH_2$, or a group -O-COOR" or a group -CN, or a group -B $(OH)_2$,
- an $C_1$-$C_6$ Heteroaryl wherein said heteroaryl comprises one, two or three N atoms or a S atom,
- a group -CO-$NH_2$, -CO-NHR, -CO-$N(R)_2$,
- a group dimethoxysilane or trimethoxysilane group.

Preferably, the said vinyl polymer is chosen among polyethylene, polypropylene, polystyrene, poly(vinyl chloride), poly(alyl) methacrylate, poly(alkyl methacrylate) such as poly(methyl methacrylate).

Preferably, the said vinyl polymer has an initial degree of polymerization (DP) of at least 10, preferably at least 100, more preferably at least 500, notably at least 1,000, notably at least 10,000, notably at least 100,000.

In a preferred embodiment of the method according to the present invention, the water-based emulsion is obtained by mixing the vinyl polymer with an interfacial agent for example sodium dodecyl sulfate.

In the method according to the present invention, the relative variation of molar mass between the initial polymer and any of the at least one degradation product can reach up from 10 to, but not including, 100%, more preferably 50 to, but not including, 100%, even more preferably 90 to, but not including, 100%.

The relative variation of molar mass is determined as follows:

$$100 * (Mto - Mf) / Mi$$

where

Mto is the average initial molar mass of initial vinyl polymer, and
Mf is the average final molar mass of the degradation products (i.e., the average final molar mass).

In other words, in this context, "variation of molar mass" refers advantageously to the percentage change in the average molar mass of a polymer as it undergoes degradation to form a product with a lower molar mass. This variation indicates the extent to which the polymer's molar mass has been reduced as a result of the degradation process.

A high percentage indicates significant degradation, while a lower percentage shows less change.

Preferably the vinyl polymer has an initial concentration in the reaction mixture comprised from 0.5 to 200.0 g/L, for example from 5.0 to 100.0 g/L, from 5.0 to 80.0 g/L, from 10.0 to 70. g/L, from 20.0 to 60.0 g/L or from 30.0 to 40.0 g/L, or from 5.0 to 15.0 g/L.

Preferably the at least one multi-copper oxidase used in the method according to the present invention is a multi-copper oxidase which is extracted from a microorganism chosen among fungal species belonging to the *Trametes* genera.

Preferably, the at least one multi-copper oxidase is a high-redox potential enzyme having a standard redox potential of at least 0.600 V versus normal hydrogen electrode (NHE), preferably at least 0.700 V, even more preferably at least 0.750 V (NHE).

Preferably the at least one multi-copper oxidase has an initial concentration in the reaction mixture comprised from 0.1 to 40.0 enzyme units per mL of reaction mixture (U/mL), preferably from 0.5 to 30 enzyme units per mL, more preferably from 1.0 to 20.0 enzyme units per mL, more still more preferably from 1.0 to 10.0 enzyme units per mL notably equal to 2.0 enzyme units per mL.

Preferably, the mediator used in the method according to the present invention is chosen from the group consisting of 1-hydroxybenzotriazole (HBT) and its derivatives, N-hydroxyacetanilide (NHA), N-acetyl-N-phenylhydroxylamine (NEIAA), 3- hydroxy 1,2,3-benzotriazin-4(3H)-one (HBTO), N-hydroxyphtalimide, (2,2,6,6-tetramethylpiperidin-1-yl)oxyl (TEMPO), violuric acid, promazine and phenolic compounds such as vanillin and acetovanillone or a mixture thereof.

Said mediator has an initial concentration in the reaction mixture comprised from 1.0 to 100.0 millimole per liter (mmol/L), preferably comprised from 1.0 to 50.0 mmol/L, more preferably from 3.0 to 30.0 mmol/L, notably from 3.0 to 25.0 mmol/L.

In a preferred embodiment the pH of the reaction mixture is comprised from 3.5 to 7.0, more preferably from 4.0 to 7.0, more preferably from 5.0 to 7.0 and even more preferably from 6.0 to 7.0.

In a preferred embodiment in the method according to the present invention, in the reaction mixture, it can be added at least one additional vinylic monomer (with the formulae as described above).

Preferably, said at least one additional vinylic monomer has an initial concentration in the reaction mixture comprised from 2 to 300 millimolar, from 2 to 200 millimolar, from 2 to 100 millimolar, from 2 to 50 millimolar, from 2 to 25 millimolar, from 2 to 10 millimolar, from 2 to 5 millimolar.

The addition of the vinylic monomer could be done in one time or several times in the reaction mixture when degrading the vinyl polymer in emulsion.

The vinylic monomer added to the reaction mixture can be the one which was used to generate the vinyl polymer or a different one according the vinylic monomer with the formulae as described above.

Another object of the invention is related to the use of at least one vinyl monomer in a method for degrading a vinyl polymer, which vinyl monomer is added in said reaction mixture comprising said vinyl polymer in a water-based emulsion and said enzyme mediator system.

Another object of the present invention is related to a kit-of-parts for degrading a vinyl polymer having an initial molar mass in order to form at least one degradation product having a final molar mass lower than the initial molar mass, the kit-of-parts comprising:

a) the water-based emulsion of said vinyl polymer;
b) at least one enzyme-mediator system comprising:

- at least one multi-copper oxidase chosen among a laccase, a laccase-ferroxidase, a laccase-like multi-copper oxidase or a mixture thereof;
- at least one respective mediator; and
- optionally, at least one additional vinylic monomer,

wherein the at least one multi-copper oxidase and the at least one mediator are intended to be either mixed separately with the water-based emulsion or provided as a pre-mix preserved under anaerobic conditions, until being mixed with the water-based emulsion.

In one embodiment, the kit-of-parts, for degrading a vinyl polymer having an initial molar mass in order to form at least one degradation product having a final molar mass lower than the initial molar mass, comprises:

- a water-based emulsion of said vinyl polymer and optionally at least one additional vinylic monomer;
- at least one enzyme chosen among a laccase, a laccase-ferroxidase and a laccase-like multi-copper oxidase or a mixture thereof,

and, for said kit-of-parts, it is added at least one respective mediator.

In another embodiment of the present invention, the kit-of-parts for degrading a vinyl polymer having an initial molar mass in order to form at least one degradation product having a final molar mass lower than the initial molar mass, comprises:

- a water-based emulsion of said vinyl polymer and optionally at least one additional vinylic monomer;
- the at least one respective mediator.

And, for said kit-of-parts, it is added at least one enzyme chosen among a laccase, a laccase-ferroxidase and a laccase-like multi-copper oxidase or a mixture thereof.

The method thus allows much more extensive degradation of the vinyl polymer than prior art biological methods, and the subsequent upcyling and/or recycling of the degradation products.

Moreover, the method can be performed at a temperature comprised between 30°C to 45°C and hence consumes little energy.

The method is advantageously performed in aqueous phase and thus makes it possible to limit or reduce the use of harmful chemicals.

In addition, all the steps of the method can easily be implemented on an industrial scale.

## BRIEF DESCRIPTION OF THE DRAWINGS

The invention will be easier to understand in view of the following description, provided solely as an example and with reference to the appended drawings in which:

- Figure 1 relates to PS deconstruction by the Laccase-mediator system (LMS);
- Figure 2 relates to the effect of the temperature on the LMS-mediated degradation of the PS synthesized in emulsion;
- Figure 3 relates to the influence of the nature of the mediator on the LMS-mediated degradation of PS synthesized in emulsion;
- Figure 4 relates to the effect of the pH on the LMS-mediated degradation of the PS synthesized in emulsion;
- Figure 5 relates to LMS-mediated degradation of the PS synthesized in emulsion upon multiple additions of laccase, HBT and styrene;
- Figure 6 relates to effect of the addition of styrene on the LMS-mediated degradation of emulsified commercial PS.

## DETAILED DESCRIPTION OF SOME EMBODIMENTS

The invention relates to a method for degrading a vinyl polymer having an initial molar mass in order to form at least one degradation product having a final molar mass lower than the initial molar mass.

The method comprises:

a) providing a water-based emulsion of the vinyl polymer;
b) mixing the water-based emulsion with at least one enzyme-mediator system to obtain a reaction mixture,

said at least one enzyme-mediator system comprising:

- at least one multi-copper oxidase chosen among a laccase, a laccase-ferroxidase, a laccase-like multi-copper oxidase or a mixture thereof, and
- at least one mediator,

said at least one multi-copper oxidase and said at least one respective mediator being:

- either mixed sequentially with the water-based emulsion,
- or provided as a pre-mix preserved under anaerobic conditions, until being mixed with the water-based emulsion;

c) stirring the reaction mixture under an atmosphere comprising dioxygen; and

d) recovering the at least one degradation product of the vinyl polymer.

**Vinyl based polymer:**

The vinyl polymer is a macromolecule that may be obtainable by polymerization, or copolymerization, of at least one vinylic monomer.

A vinylic monomer refers to a monomer comprising a vinyl group or, in other words, a C=C double bond (carbon-carbon double bond).

The vinyl monomer may be hence of formulae

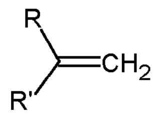

wherein

R is independently selected from H or $CH_3$ or a $CF_3$,
R' is independently selected from:

- an atom chosen among H, F, Cl, Br, or I,
- a linear or branched alkyl from 1 to 10 carbon optionally substituted by one or more
- COOH group
- a group -COOH,
- a group -COOR" wherein R" is a linear or branched $C_1$-$C_{10}$ alkyl group optionally substituted by a group OH,
- an optionally substituted benzyl group or a substituted phenyl group where said substituents are selected from H, F, Cl, Br, I or a $C_1$-$C_6$ linear or a branched alkyl, -O-$C_1$-$C_6$alkyl group or a group-COH, or a group -COOH, or a group -COOR", or a group
- $NH_2$, or a group -O-COOR" or a group -CN, or a group -B $(OH)_2$,
- an $C_1$-$C_6$ heteroaryl group wherein said heteroaryl group comprises one, two or three N atoms or a S atom,
- a group -CO-$NH_2$, -CO-NHR, -CO-$N(R)_2$,
- a group dimethoxysilane or trimethoxysilane.

The vinylic monomer is for example chosen among ethylene, propylene, styrene and their derivatives, such as vinyl chloride, vinyl fluoride, vinyl acetate, butadiene, isobutene, 2-methyl-1,3-butadiene (isoprene), methyl styrene, or others.

According to the present invention, the term vinyl refers advantageously to a group having a carbon-carbon double bond whereof one carbon has two hydrogen atoms linked in as follows:

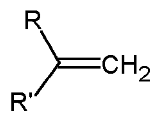

A vinyl polymer according to the present invention refers to a polymer obtained with a vinyl monomer as described previously.

The vinylic monomer is for example an acrylate and methacrylate (when R' is CH3) monomer, such as vinyl acrylate, such as methylmethacrylate, butylmethacrylate.

The vinyl polymer may be:

- a polymer of the above-mentioned vinylic monomers, or
- a copolymer of one or more of the above-mentioned vinylic monomers.

The vinyl polymer may be chosen among styrenics, i.e. the polymers or copolymers of styrene or of a styrene derivative, such as polystyrene (PS), a styrene-butadiene rubber (SBR), a styrene-butadiene-styrene (SBS) copolymer.

The vinyl polymer may be chosen among a polyethylene (PE), a polypropylene (PP), a polybutadiene, a poly(methylpentene), a polybutene, a polyisobutylene, a poly(vinyl chloride), a poly(ethylene-co-vinyl acetate) (EVA), a copolymer of ethylene and vinyl alcohol (EVOH), a polyisoprene, and a polyacrylate.

The vinyl polymer may be a polyolefin-like multiblock copolymer, comprising one or more easily degradable

blocks and one or more polyolefin blocks.

The vinyl polymer may comprise a recycled polymer.

The vinyl polymer may be a cross-linked polymer.

The vinyl polymer may be characterized by at least one of its number average molecular mass Mn, its mass average molecular mass Mw, its peak molar mass Mp, and/or its polydispersity index PDI.

The number average molecular mass Mn is the average of the molar masses Mi of the individual macromolecules:

$$M_n = \frac{\sum_i N_i M_i}{N_i},$$

where Ni is the number of macromolecules having the molar mass Mi.

The mass average molar mass Mw is the average of the molar masses weighted by the mass of chains of each length:

$$M_w = \frac{\sum_i N_i {M_i}^2}{N_i M_i}$$

The polydispersity index PDI is the ratio of the mass average molar mass Mw over the number average molar mass Mn of the polymer.

The peak molar mass Mp is the molar mass corresponding to the highest peak of the distribution curve of the molar masses Mi of the individual macromolecules of the polymer sample.

The number average molar mass Mn, the mass average molar mass Mw of the vinyl polymer and the peak molar mass Mp may be measured by size exclusion chromatography (SEC), in particular by gel permeation chromatography (GPC).

By "initial" is meant herein to refer to the vinyl polymer before the degradation of the polymer has begun, in particular before the mixing of the water-based emulsion with said at least one enzyme-mediator system.

As used herein, "an initial molar mass" refers to one or more molar masses chosen among the initial number average molar mass Mn, the initial mass average molar mass Mw and the initial peak molar mass Mp of the vinyl polymer.

The vinyl polymer may have an initial number average molar mass Mn of at least 1,000 g/mol, 2,000 g/mol, 5,000 g/mol, 10,000 g/mol, 50,000 g/mol, 100,000 g/mol, 150,000 g/mol, 200,000 g/mol, at least 300,000 g/mol, at least 400,000 g/mol, at least 500,000 g/mol at least 1,000,000 g/mol, at least 10,000,000 g/mol.

The vinyl polymer may have an initial peak molar mass Mp of at least 1,000 g/mol, 2,000 g/mol, 5,000 g/mol, 10,000 g/mol, 50,000 g/mol, 100,000 g/mol, 150,000 g/mol, 200,000 g/mol, at least 300,000 g/mol, at least 400,000 g/mol, at least 500,000 g/mol at least 1,000,000 g/mol, at least 10,000,000 g/mol.

The vinyl polymer may have an initial molar mass average molar mass Mw of at least 2,000 g/mol, 4,000 g/mol, 8,000 g/mol, 10,000 g/mol, 100, 000 g/mol, 1,000,000 g/mol, 10,000,000 g/mol, 20,000,000 g/mol, 30,000,000 g/mol, 40,000,000 g/mol, 50,000,000 g/mol.

The vinyl polymer may have an initial degree of polymerization DP of at least 10, preferably at least 100, more preferably at least 500, notably at least 1,000, notably at least 10, 000, notably at least 100,000.

The degree of polymerization DP is herein defined as the ratio of the number average molar mass Mn of the vinyl polymer over the molar mass of the vinylic monomer both in case of a polymer and of a copolymer.

**Water-based emulsion:**

The vinyl polymer is provided at step a) in the form of a water-based emulsion also called a latex.

By "latex", it is defined advantageously in the present invention as polymeric particles (here a vinyl polymer), of micron or submicron or nano sizes, dispersed in an aqueous or an hydroalcoholic solution.

The water-based emulsion comprises particles of the vinyl polymer dispersed in water.

The water-based emulsion may be characterized by the particle size distribution (PSD), and in particular by the modal diameter and/or the mean diameter of the particles of the vinyl polymer.

Preferably, the initial concentration of the vinyl polymer as described above, in the water-based emulsion (the latex), is comprised from 1 g/L, 5 g/L, 10 g/L 20 g/L, 30 g/L, 40 g/L, 50 g/L, 100 g/L, 125 g/L, 150 g/L to 200 g/L.

The modal diameter and the mean diameter may be measured by dynamic light scattering (DLS) or transmission electron microscopy (TEM).

Advantageously, the initial average diameter of the particles of the vinyl polymer in the water-based emulsion is about 10 to 40 nm, 40 to 50 nm, 50 to 100 nm, 100 to 200 nm, 200 to 300 nm, 300 to 400 nm, 400 to 500 nm, 500nm to 1 μm,

1 to 2 μm, 2 to 5 μm, 5 to 10 μm.

The water-based latex can be obtained, after a polymerization step of the vinylic monomer typically by radical polymerization with the presence of a polymer initiator, with an additional surfactant in the water.

If the vinyl polymer to be degraded is not already in the form of the water-based emulsion, the method may further comprise, before step a), a step 1) comprising:

* providing the vinyl polymer, and
* forming the water-based emulsion by mixing the vinyl polymer with an interfacial agent.

In this case, the vinyl polymer can be provided at step 1) in the form of a powder.

Alternatively, the vinyl polymer can be provided at step 1) in a form other than a powder, for example a film or solid part. In such a case, step 1) is preceded by a mechanical treatment step or solubilization in an organic solvent.

The mechanical treatment step can comprise the grinding of the vinyl polymer to form a powder of the vinyl polymer, and optionally a sieving step.

At step 1), the powder may be solubilized in a solvent and then dispersed in the aqueous solution so as to obtain the water-based emulsion. The solvent used to solubilize the powder could be then removed for example by evaporation.

The interfacial agent facilitates the formation of the emulsion, in particular in cases where the vinyl polymer is hydrophobic, such as polystyrene.

The interfacial agent is for example chosen among an anionic surfactant, such as sodium dodecyl sulfate (SDS), a non-ionic surfactant, such as polyvinylpyrrolidone, a surfactant protein and a salt containing an organic ion and having a melting point below 100°C, preferably below 25°C, also called ionic liquid.

The molar concentration of the interfacial agent in the water-based emulsion may be comprised from 0 to 60 mM, preferably 0 to 20 mM.

**The reaction mixture used to degrade the vinyl polymer:**

As specified above, the method then comprises a step of mixing the water-based emulsion with at least one enzyme-mediator system to obtain a reaction mixture.

The at least one enzyme-mediator system comprises:

- at least one multi-copper oxidase (also named the enzyme) chosen among a laccase, a laccase-ferroxidase, a laccase-like multi-copper oxidase or a mixture thereof, and
- at least one (respective) mediator,

And, in one embodiment, said at least one multi-copper oxidase and said at least one respective mediator are mixed sequentially with the water-based emulsion.

In this context, "sequentially" means that the multi-copper oxidase and the mediator are added (in other word mixed) to the water-based emulsion, one after the other, preferably in a specific order.

This implies that the multi-copper oxidase is mixed first with the water-based emulsion, followed by the mediator (or vice versa), rather than being added simultaneously.

In other word, "sequentially" in this context refers to mixing the multi-copper oxidase and the mediator with the water-based emulsion, in a prescribed sequence, one after the other, to ensure the desired reaction pathway.

In this context, "sequentially" means that the multi-copper oxidase and the mediator are added (or mixed) to the water-based emulsion, one after the other, and always in the presence of the substrate (here, the water-based emulsion) once the enzyme and mediator are combined.

Here, "sequentially" is equivalent to "subsequently", as both terms indicate that the components are introduced one after the other, rather than simultaneously.

In one embodiment, in a first time, the enzyme is mixed with the water-based emulsion, and, in a second time, the mediator is added.

In another embodiment, in a first time, the mediator is mixed first with the water-based emulsion, and, in a second time, the enzyme is added.

In the invention, the water-based emulsion can also be added between the enzyme and the mediator.

Thus, in other words, the sequence of addition can follow one of several orders, including:

- water-based emulsion, followed by the enzyme, and then the mediator;
- water-based emulsion, followed by the mediator, and then the enzyme;
- enzyme, followed by the water-based emulsion, and then the mediator;
- mediator, followed by the water-based emulsion, and then the enzyme.

The reaction mixture according to the present invention is for example obtained as follows:

1) Adding to the latex (vinyl polymer in water or hydroalcoholic solution) as described above, the at least one multi-copper oxidase which will degrade the polymer, optionally adding a buffer solution compatible with the enzyme such as sodium phosphate buffer before adding the enzyme to the latex,
preferably keeping the mixture at a pH from 3.5 to 7.0, more preferably from 4.0 to 7.0, even more preferably from 5.0 to 7.0 even more preferably 6.0 to 7.0,
2) then to the mixture of enzyme and the latex, adding the mediator, e.g. from a stock solution in water and / or in water miscible solvent such as dimethylsulfoxide (DMSO) or ethanol (EtOH).

In another embodiment, said at least one multi-copper oxidase and said at least one respective mediator are provided as a pre-mix preserved under anaerobic conditions, until being mixed with the water-based emulsion.
"Pre-mix" refers to a preparation in which two or more components are combined in advance to create a mixture before being added to another system or used in a process. In the context of this invention, a pre-mix of at least one multi-copper oxidase and at least one respective mediator means preferably that these components are blended together under specific conditions (e.g., anaerobic) to prevent premature reactions. This ensures the components are ready for immediate use when introduced into the water-based emulsion for the polymer degradation process.
"Under anaerobic conditions" means in an environment where oxygen is absent or minimized. In the context of the pre-mix, it implies that the combination of the multi-copper oxidase and the mediator is prepared and stored in an oxygen-free setting. This prevents any enzymatic activity from occurring prematurely. Keeping the pre-mix under anaerobic conditions ensures its stability and maintains the components in an inactive state until they are intentionally exposed to an aerobic (oxygen-containing) environment for the intended reaction.
Preferably, this approach ensures that the enzyme and the mediator can be combined and stabilized without initiating a reaction prematurely, as the absence of oxygen (anaerobic conditions) prevents enzymatic activity. Maintaining this pre-mix in such controlled conditions allows for flexible handling and storage before its use in the reaction.
Once ready for use, the pre-mixed enzyme and mediator are introduced to the water-based emulsion containing the vinyl polymer. The addition under aerobic conditions activates the enzymatic process, facilitating the controlled degradation of the polymer. This method provides an advantage by ensuring that the enzyme-mediator interaction is prepared in advance while maintaining reactivity only at the desired stage of the process.

**In the reaction mixture:**

The vinyl polymer may have an initial concentration, in the reaction mixture, comprised from 0.5 to 200.0 g/L, for example from 5.0 to 90.0 g/L, from 5.0 to 80.0 g/L, from 10.0 to 70.0 g/L, from 20.0 to 60.0 g/L or from 30.0 to 40.0 g/L, or from 5.0 to 15.0 g/L.
The enzyme is a multi-copper oxidase chosen among a laccase, a laccase-ferroxidase, a laccase-like multi-copper oxidase or a mixture thereof.
The enzyme may be a natural or engineered enzyme.
Multi-copper oxidases (MCOs) belong to a protein superfamily of enzymes which oxidize the substrate at a mononuclear copper center T1. Electrons are then transferred internally to the trinuclear copper center T2/T3 where dioxygen is reduced by four electrons, yielding two water molecules.
A laccase is a multi-copper oxidase typically involved in lignin degradation/modification at least in the case of plant or fungal enzymes. The laccase corresponds typically to reference EC 1.10.3.2 in the IUBMB Enzyme Nomenclature.
A laccase-like multi-copper oxidase refers to a MCO that has a biological function other than ligninolytic.
The enzyme is for example chosen in the Auxiliary Activity family 1 (AA1 family) of the Carbohydrate-Active enZYmes (CAZy) classification.
The enzyme may be extracted from a fungal species belonging to the *Trametes* genera. In particular, the enzyme may have a mature protein sequence identical to SEQ_ID NO:1 or having at least 80% identity with SEQ_ID NO:1.
The enzyme is advantageously a high-redox potential enzyme, for example a high-redox potential laccase (HRPL), having a standard redox potential of at least 0.600 V versus normal hydrogen electrode (NHE), preferably at least 0.700 V, even more preferably at least 0.750 V.
One enzyme unit (U) is herein defined as the amount of enzyme that catalyzes the conversion of one micromole of benzene-1,2-diol, also called catechol, per minute at a pH of 5.0 and a temperature of 298 K.
The enzyme may thus have an initial concentration in the reaction mixture comprised from 0.1 to 40.0 enzyme units per mL of reaction mixture (U/mL), preferably from 0.5 to 30 enzyme units per mL, more preferably from 1.0 to 20.0 enzyme units per mL, more still more preferably from 1.0 to 10.0 enzyme units per mL notably equal to 2.0 enzyme units per mL.

The oxidizing efficiency of the enzyme can be improved through the use of the mediator (also named simply "mediator"), also known as an enhancing agent, wherein the enzyme and the mediator form an enzyme-mediator system.

In case the enzyme is a laccase, the enzyme-mediator system is a so-called laccase-mediator system (LMS).

The mediator advantageously comprises a group -N-O- wherein the nitrogen atom is trivalent, the lone pair being preferably delocalized.

In the phrase "respective mediator," the term " respective" means that each multi-copper oxidase is preferably associated with its corresponding or matching mediator. This implies that, preferably, there is a specific pairing between an enzyme and its mediator, where each enzyme is paired with the appropriate mediator that complements its activity.

Preferably, the mediator is chosen from the group consisting of 1-hydroxybenzotriazole (HBT) and its derivatives, N-hydroxyacetanilide (NHA), N-acetyl-N-phenylhydroxylamine (NEIAA), 3- hydroxy 1,2,3-benzotriazin-4(3H)-one (HBTO), N-hydroxyphtalimide, (2,2,6,6-tetramethylpiperidin-1-yl)oxyl (TEMPO), violuric acid, promazine and phenolic compounds such as vanilline and acetovanillone or a mixture thereof.

The mediator is mixed with the reaction media from a solution stock in water and/or in a water miscible solvent such as dimethylsulfoxide (DMSO), dimethylformamide (DMF), ethanol (EtOH), methanol (MeOH), acetonitrile (ACN), tetrahydrofurane (THF) or a mixture thereof.

The mediator may thus have an initial concentration in the reaction mixture comprised from 1.0 to 100.0 millimole per liter (mmol/L), preferably comprised from 1.0 to 50.0 mmol/L, more preferably comprised from 1.0 to 30.0 mmol/L, notably from 3.0 to 25.0 mmol/L.

In a particular embodiment, the reaction mixture may comprise one or more complementary water-miscible solvent, such as ethanol.

The complementary water-miscible solvent may be chosen to facilitate the formation of the water-based emulsion and/or to stabilize this emulsion and/or to increase the solubility of the mediator.

The nature and the proportion of the complementary water-miscible solvent in the reaction mixture are advantageously chosen so as not to decrease significantly the enzyme activity.

**Stirring step:**

The reaction mixture is them stirred under an atmosphere comprising dioxygen.

Dioxygen is a reagent advantageously required for the enzymatic degradation of the vinyl polymer with the enzyme.

The atmosphere is for example ambient air.

In another embodiment, the stirring is performed under controlled atmosphere. The dioxygen concentration at 40°C is about 200 micromolar, while avoiding being at dioxygen saturation.

The reaction mixture is advantageously stirred at a controlled temperature T.

The controlled temperature T is for example comprised from 20°C to 60°C, preferably from 30°C to 50°C, more preferably from 35°C to 45°C, for example equal to 40°C.

In a particular embodiment, the stirring step is performed at ambient temperature. This provision allows to limit or reduce the energy consumption of the method.

The reaction mixture may have a controlled pH during the stirring step.

The controlled pH may be comprised from 3.5 to 7.0, more preferably from 4.0 to 7.0, more preferably from 5.0 to 7.0 and even more preferably from 6.0 to 7.0.

The controlled pH may be higher than the optimum pH for the enzyme, the optimum pH corresponding to a maximum enzyme activity regarding its nominal oxidase activity.

Without wishing to be bound by a theory, the inventors think that a controlled pH higher than the optimum pH may help stabilize the intermediate free radicals of the mediator formed starting from the mediator.

By way of an example, if the enzyme is a laccase having an optimum pH ranging from 4.0 to 5.0, the controlled pH will advantageously be chosen in the range [5.5; 6.5].

The duration of the stirring step may be chosen according to the vinyl polymer, in particular of its number average molar mass and/or of its mass average molar mass and/or of its peak molar mass.

The duration of the stirring step may be chosen according to the expected at least one degradation product, or in other word the desired extent of the degradation, as will be described hereafter.

The duration of the stirring step is vinyl polymer dependent, and it may last for example more than one month with several addition of laccase and the corresponding mediator.

In other examples, the duration of the stirring step may last for less than 10 days, or less than 8 days, or 48 hours with only a single addition of laccase and a single addition of mediator (said enzyme and said mediator may be added sequentially).

**Degradation product:**

The method is suitable for allowing recovering the at least one degradation product of the vinyl polymer.

As already mentioned, the at least one degradation product has a final molar mass lower than the initial molar mass of the vinyl polymer.

The "final molar mass" is the number average molar mass of the degradation product in case the initial molar mass of the vinyl product is defined as the initial number average molar mass Mn of the vinyl polymer.

The "final molar mass" is the mass average molar mass of the degradation product in case the initial molar mass of the vinyl product is defined as the initial mass average molar mass Mw of the vinyl polymer.

The final molar mass is the peak molar mass of the degradation product in case the initial molar mass of the vinyl product is defined as the initial peak molar mass Mp of the vinyl polymer.

In general, a plurality of degradation products is progressively formed in the reaction mixture, the degradation products possibly subsequently reacting themselves with the enzyme, as substrate of the enzyme, depending on their respective molar mass.

Advantageously, the method according to the invention allows in particular controlling one or more characteristics of the degradation product chosen among the number average molar mass and/or the mass average molar mass and/or the peak average molar mass and/or the polydispersity index of the degradation product, as shown in examples 1 to 6.

Preferably, a sample or a plurality of samples during the reaction are taken from the stirred reaction mixture and analyzed by size-exclusion chromatography or NMR to determine if the degradation of the polymer is efficient.

The relative variation between (i) the initial vinyl polymer and (ii) one or more of the number average molar mass and/or the mass average molar mass and/or the peak average molar mass of the at least one degradation product can reach up from 10 to, but not including, 100%, more preferably 50 to, but not including, 100%, even more preferably 90 to, but not including, 100%.

The relative variation of molar mass is determined as follows:

$$100 * (Mto - Mf) / Mi$$

where Mto is the average initial molar mass and Mf is the average final molar mass.

As specified before, in this context, "variation of molar mass" refers advantageously to the percentage change in the average molar mass of a polymer as it undergoes degradation to form a degradation product with a lower molar mass. This variation indicates the extent to which the polymer's molar mass has been reduced as a result of the degradation process.

A high percentage indicates significant degradation, while a lower percentage shows less change.

**Adding at least one additional vinylic monomer to the reaction mixture:**

In an alternative or complementary option, in order to better control the characteristics of the degradation product (e.g. improve the degradation process), the method according to the invention comprises adding at least one additional vinylic monomer to the reaction mixture.

The at least one additional vinylic monomer may be either the vinylic monomer of formulae

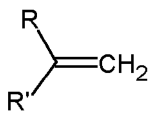

as described above on which the vinyl polymer is based or another vinylic monomer.

The initial concentration of the at least one additional vinylic monomer in the reaction mixture is for example comprised from 2 to 300 millimolar, for example from 2 to 200 millimolar, from 2 to 100 millimolar, from 2 to 50 millimolar, from 2 to 25 millimolar, from 2 to 10 millimolar, from 2 to 5 millimolar.

The at least one vinylic monomer could be added in one time in the reaction mixture or multiple time and sequentially during the stirring step (the same manner also concerns the enzyme and the mediator which could be added in one or multiple time).

In other words, the at least one vinylic monomer could be added in the reaction mixture in one time or several times until the degradation of the vinyl polymer is achieved.

The at least one vinylic monomer added to the reaction mixture could be the same as the vinyl polymer in emulsion or could be another one selected in the formulae as described above.

It could also be a mixture of different vinylic monomers. For example, in case of degrading a polystyrene, the vinylic monomer added to the reaction mixture could be a styrene and a methylmetacrylate.

The degradation product(s) is (are) recovered with any appropriate separation technique, such as extraction and further analysis by chromatography techniques. One sample during the reaction could be extracted or multiple samples. The sample is treated according to the requirement of the characterization technique (SEC, NRM, Mass spectroscopy) in order to determine its content and nature.

Advantageously, the method of the invention may allow precise control of the nature of the degradation product(s), that may further allow a subsequent upcycling or recycling of the degradation product(s) can be carried out.

Advantageously the present invention lies in the fact that the polymers, when degraded, allow to obtain small molecules of interest, capable of being used in many fields.

In the case of polystyrene, by implementing the method according to the invention, various degradation products are obtained which are chosen from acetophenone, benzaldehyde, benzoic acid, formic acid, formaldehyde or their mixtures. A waste can provide very useful compounds.

**Kit-of-parts:**

The invention also relates to a corresponding kit-of-parts.

The kit of parts for degrading the vinyl polymer having an initial molar mass in order to form the at least one degradation product having a final molar mass lower than the initial molar mass comprises:

a) the water-based emulsion of said vinyl polymer;
b) at least one enzyme-mediator system comprising:

- at least one multi-copper oxidase chosen among a laccase, a laccase-ferroxidase, a laccase-like multi-copper oxidase or a mixture thereof;
- at least one respective mediator; and
- optionally, at least one additional vinylic monomer,

wherein the multi-copper oxidase and the mediator are intended to be added:

- separately or
- as a pre-mix preserved under anaerobic conditions, until being mixed with the water-based emulsion.

Preferably, "intended to be added separately" means that the multi-copper oxidase and the mediator might not be mixed or combined before their introduction into the reaction mixture. Instead, each component is preferably mixed one at a time, in a sequential manner, to maintain their individual effectiveness and ensure optimal conditions for the degradation reaction.

The kit-of-parts can be prepared in various manner based on three steps as follow:

a) the water-based emulsion of said vinyl polymer and optionally the additional vinylic monomer;
b) the at least one multi-copper oxidase chosen among a laccase, a laccase-ferroxidase and a laccase-like multi-copper oxidase or a mixture thereof; and
c) the at least one respective mediator.

One kit-of-parts is based on a composition of a) and b) present at the same time and then a solution of c) is added to a solution of a) and b).

Another kit-of-parts is based on a composition of a) and c) present at the same time and then a solution of b) is added to a solution of a) and c).

The characteristics and advantages of the invention will appear more clearly in the light of the implementation examples below, provided purely for illustrative purposes and in no way limiting the invention, with the support of Figures 1 to 6, in which:

**EXEMPLE**

**MATERIAL AND METHODS**

**General**

Chemicals and reagents were obtained from usual commercial suppliers (Merck Sigma-Aldrich, Fischer Scientific, VWR and TCI) at the highest commercial quality and were used as received unless otherwise stated. Styrene was filtered through basic alumina prior to use. Commercial polystyrene was purchased from Merck Sigma-Aldrich as pellets, dissolved in THF and precipitated in methanol, filtered and then dried overnight under vacuum. Powder of laccase from *Trametes versicolor* was purchased from Merck Sigma-Aldrich and either directly dissolved as received in sodium phosphate buffer (20 mM, pH 6.0) then filtered on 0.1 μm acrodisc syringe filter (Pall Corporation) or used after in-house purification (see below) when stated. Evaporation of solvents was conducted under reduced pressure at temperatures less than 50 °C with a rotary evaporator. Emulsification of polystyrene was performed using a Bandelin SONOPLUS ultrasound probe sonicator with a MS72 microtip. The Britton-Robinson buffers in the pH range of 3-8 were prepared to achieve an equimolar mixture of 0.5 M acetic acid, 0.5 M boric acid and 0.5 M phosphoric acid. The pH value was adjusted using a NaOH solution.

**General method for polystyrene synthesis by free-radical polymerization in emulsion conditions**

In a two-neck round-bottom flask, sodium dodecyl sulphate (SDS, 0.166-0.664 g, 0.575-2.30 mmol, 13.2-52.6 equiv.) and ACPA (6.2-36.8 mg, 0.0221-0.131 mmol, 0.5-3.0 equiv.) was added to 45 mL of deionized water or sodium phosphate buffer (0.5 or 0.25 M, pH = 6.0) or sodium chloride solution (0.25 M). Argon was bubbled for 30 minutes. In another flask, styrene (5.0 mL, 43.7 mmol, 1000 equiv.) was added and argon was also bubbled for 30 minutes. Styrene was then transferred to the two-neck round-bottom flask containing the other reagents and the reaction was vigorously stirred at 80°C for the desired time (2 or 24 h). The reaction was then quenched by exposing it to air, allowed to cool down, and kept as an emulsion (latex). Reference latex was synthesized with SDS (0.166 g, 0.575 mmol, 13.2 equiv.), ACPA (12.3 mg, 0.0437 mmol,1.0 equiv.) and styrene (5.0 mL, 43.7 mmol, 1000 equiv.) in sodium phosphate buffer (0.5 M, pH = 6.0) for 2 h. For SEC and NMR analysis, 50-100 μL of latex were saturated with sodium chloride and extracted with ethyl acetate (1.0 mL) before ethyl acetate was removed under reduce pressure. NMR spectra were performed in deuterated chloroform and $^1$H NMR agreed with literature.

**Determination of styrene concentration in synthesized PS in emulsion**

50 μL of latex was saturated with sodium chloride and extracted with ethyl acetate (0.3 mL). $CD_2Cl_2$ (0.5 mL) was then added and $^1$H NMR was performed at 296 K on the Bruker Avance NEO 400 MHz NMR spectrometer with solvent peak suppression (ethyl acetate signals at 4.08 and 2.00 ppm were suppressed). The styrene concentration was determined as the ratio of residual styrene to PS.

**PS powder from PS latex**

300 μL of PS latex were saturated with sodium chloride and extracted ethyl acetate (3.0 mL). PS dissolved in ethyl acetate was then precipitated in cold methanol (90 mL) under vigorous stirring. The mixture was centrifugated (1 h, 4500 rpm) and the liquid removed to led PS powder. PS powder was dried at 80°C overnight.

**PS film from PS latex**

Aqueous solution saturated in NaCl (40 mL) was added to 5.0 mL of PS latex. PS was then extracted with ethyl acetate (3 x 40 mL), dried over anhydrous $MgSO_4$, filtered and partially concentrated under reduced pressure. The solution was then transferred in a 20 mL glass vial and the remove of the rest of the solvent under reduce pressure led to the formation of PS film. PS film was then dried at 80°C overnight.

**Re-emulsification of PS**

Around 100 mg of PS film previously form from PS latex were dissolved in 2.5 mL of dichloromethane. In another vial, SDS (17 mg) was dissolved in 5 mL of milliQ water or sodium phosphate buffer (50 mM, pH = 6.0). The aqueous solution was added to the organic one and the mixture was sonicated using an ultrasound probe sonicator at 30% amplitude (cycle of an alternation of 2 seconds of sending ultrasounds and 2 seconds of pause, for 4 min in total). Dichloromethane was removed under reduced pressure to lead the polystyrene latex with a concentration of around 20 $mg.mL^{-1}$ in PS.

**General method for the emulsification of commercial polystyrene and expanded polystyrene waste**

Around 400 mg of PS (commercial PS precipitated in methanol or expanded polystyrene waste) were dissolved in 10 mL of dichloromethane. In another vial, SDS (68 mg) was dissolved in 20 mL of milliQ water or sodium phosphate buffer (50 mM, pH = 6.0). The aqueous solution was added to the organic one and the mixture was sonicated using an ultrasound probe sonicator at 30% amplitude (cycle of an alternation of 2 seconds of sending ultrasounds and 2 seconds of pause, for 4 min in total). Dichloromethane was removed under reduced pressure to lead the polystyrene latex with a concentration of around 20 $mg.mL^{-1}$ in PS.

**Laccase purification**

Laccase from *Trametes versicolor* from Sigma Aldrich (62.5 mg of powder; ≥ 0.5 $U.mg^{-1}$) was resuspended in 50 mL of potassium phosphate buffer (100 mM, pH 6.0) to a concentration of 1.25 $mg.mL^{-1}$. The protein solution was then filtered through a 0.22 μm syringe filter and loaded on a 6 mL Resource Q column (Cytiva, France) connected to an ÄKTA purifier FPLC system (GE Healthcare) and equilibrated with potassium phosphate buffer (100 mM, pH 6.0). The protein was eluted using a linear salt (NaCl) gradient. Eluted fractions were concentrated on 5 kDa Vivaspin (Sartorious AG, Göttingen, Germany). Protein purity was then verified by loading each concentrated fraction onto 10% precast polyacrylamide Stain-free SDS-PAGE gels (BioRad).

**General method for the enzymatic degradation of polystyrene latex**

Unless otherwise stated, most biocatalytic reactions were carried out under air atmosphere in a 500 μL total reaction volume in 1.5 mL glass vials closed with a screw cap and under stirring and incubation in a compact Grant-Bio Orbital-Shaker incubator ES-20. In general, the reaction mixture was composed of (indicated concentrations are final concentrations) sodium phosphate buffer (pH 6.0, 50 mM), PS latex (10 $mg.mL^{-1}$), laccase (2.1 $U.mL^{-1}$) and N-hydroxybenzotriazole (HBT, from a stock solution of 0.5 M in DMSO - final concentration of 5 mM). 1 U of laccase corresponds to the amount of enzyme which oxidizes 1 micromole of catechol per minute at pH 5. 0 and 25 °C. The reactions were initiated by the addition of the mediator. In control reactions, HBT was replaced by DMSO and/or the laccase was replaced by $CuSO_4$ (50 μL from a stock solution of 100 μM - 10 μM final concentration) or milliQ water. Reaction mixtures were stirred for 48 hours at 200 rpm and 40°C. Then, the reaction mixtures were saturated with sodium chloride and extracted with ethyl acetate (1.0 mL) before ethyl acetate was removed under reduced pressure.

**Enzymatic degradation of PS powder and PS film in aqueous solution**

The same protocol as described above for PS latex was used, with the following variation: the PS was weighted in the vial as a solid powder or solid film (5.0 mg -10 $mg.mL^{-1}$ final concentration).

**Enzymatic degradation of PS in biphasic conditions**

The same protocol as described above for PS latex was used, with the following variations: biocatalytic reactions were carried out in a 1.0 mL total reaction volume (500 μL aqueous phase + 500 μL organic phase) in 1.5 mL glass vials. The aqueous phase was composed of (indicated concentrations are final concentrations) sodium phosphate buffer (pH 6.0, 50 mM), laccase (2.1 $U.mL^{-1}$) and HBT (5 mM). To this aqueous phase was added an organic phase containing PS (5.0 mg -10 $mg.mL^{-1}$ final concentration) dissolved in ethyl acetate or dichloromethane. Reaction mixtures were stirred for 48 hours at 200 rpm and 40°C. Then, the reaction mixtures were saturated with sodium chloride and the organic phase was extracted. The aqueous phase was extracted with additional organic solvent (1.0 mL, ethyl acetate or dichloromethane depending on the organic solvent used during the biocatalytic reaction). Organic phases were then combined and concentrated under reduced pressure.

**Size-exclusion chromatography (SEC) analyses**

Polymers (approximately 5 mg) were dissolved in a THF solution (1.0 mL) containing 1,2,4-trichlorobenzene (0.15% vol/vol) as flow marker. The mixtures were stirred for few hours then filtered with polytetrafluoroethylene (PTFE) filters (0.22 μm) prior to analysis. SEC was performed on an Ultimate 3000 system from Thermoscientific equipped with a diode array detector (DAD) and differential refractive index detector dRI (Wyatt technology). High molecular weight polystyrenes were separated on two gel columns TOSOH TSKgel G6000HXL (7.8 x 300 mm) and TOSOH TSKgel Multipore HXL-M (7.8 mm x 300 mm) (exclusion limits from 500 to 40,000,000 $g.mol^{-1}$), and commercial and expanded polystyrenes were separated on three gel columns G2000, G3000 and G4000 TOSOH HXL (300 x 7.8 mm) (exclusion

limits from 200 to 400 000 g.mol$^{-1}$), at 40°C using THF as eluent at a flow rate of 1 mL.min$^{-1}$. To determine the molar masses of samples, we used the EasiVial kit PS-H PL2010-0201 of polystyrene (Agilent-10 standards with Mp ranging from 3,187,000 to 580 g.mol$^{-1}$) for high molecular weight polystyrenes, and the EasiVial kit PS-M PL2010-0301 (11 standard with Mp ranging from 364,000 to 370 g.mol$^{-1}$) for commercial and expanded polystyrenes.

**Nuclear Magnetic Resonance (NMR) spectroscopy**

$^1$H spectra were recorded at 298 K on Bruker Avance III 400 MHz spectrometer (equipped with a 5 mm Bruker direct probe) or at on a Bruker Avance NEO 400 MHz NMR spectrometer (equipped with a 5 mm BBO Bruker Cryoprobe Prodigy).

In the context of the present invention, the term LMS system used in the examples refers to the addition of the laccase or enzymes as described above and the corresponding mediator as described above. The addition of the enzyme and the mediator is compliant with the method according to the invention, laccase and laccase like is added separately from the mediator, both components are added in one time or several times during the degradation process.

**Example 1: PS deconstruction by the LMS system.** The Mp of the PS latex not incubated was 2,648,000 ± 73,000 g.mol$^{-1}$. PS film and powder were obtained from the PS latex as described in the experimental section and have thus the same initial mass as PS latex before incubation. The reaction mixtures contained PS (10 mg.mL$^{-1}$) in sodium phosphate buffer (50 mM, pH 6.0) or in the organic phase for biphasic systems, and varying additional compounds (see table 1 below), and were incubated at 40°C and 200 rpm, under ambient air, during 48 h. The varying compounds (indicated in between brackets in the figure 1), added alone or combined, included: the laccase (2.1 U.mL$^{-1}$), $CuSO_4$ (10 μM) and HBT (5 mM, 1% v/v DMSO residual). Mp: peak molecular weight. lac: laccase.

Table 1.

| Sample (reactants) | Mn (g.mol$^{-1}$) | Mp (g.mol$^{-1}$) | Mw (g.mol$^{-1}$) | Đ |
|---|---|---|---|---|
| a) Latex (not incubated) | 754,000 ± 58,000 | 2,648,000 ± 72,000 | 2,303,000 ± 70,000 | 3.1 ± 0.3 |
| b) Latex (incubated, no reactant) | 733,000 ± 33,000 | 2,708,000 ± 36,000 | 2,389,000 ± 40,000 | 3.6 ± 0.2 |
| c) Latex (HBT) | 1,121,000 ± 191,000 | 2,680,000 ± 129,000 | 2,343,000 ± 117,000 | 2.2 ± 0.4 |
| d) Latex (lac) | 935,000 ± 66,000 | 2,794,000 ± 38,000 | 2,392,000 ± 58,000 | 2.6 ± 0.1 |
| e) Latex ($CuSO_4$, HBT) | 700,800 ± 237,000 | 2,596,000 ± 50,000 | 2,157,000 ± 158,000 | 3.4 ± 0.9 |
| f) Latex (lac, HBT) | 47,000 ± 4,000 | 80,000 ± 5,000 | 143,000 ± 21,000 | 3.4 ± 0.6 |
| g) Film (lac, HBT) | 599,000 ± 40,000 | 2,234,000 ± 11,000 | 1,894,000 ± 34,000 | 3.1 ± 0.1 |
| h) Powder (lac, HBT) | 781,000 ± 80,000 | 2,585,000 ± 120,000 | 2,266,000 ± 79,000 | 2.9 ± 0.4 |
| i) Biphasic system (AcOEt, lac, HBT) | 758,000 ± 26,000 | 2,538,000 ± 211,000 | 2,188,000 ± 182,000 | 2.9 ± 0.3 |
| j) Biphasic system ($CH_2Cl_2$, lac, HBT) | 673,000 ± 213,000 | 2,444,000 ± 116,000 | 2,163,000 ± 145,000 | 3.5 ± 0.8 |

In Fig.1 it is clearly demonstrated that the combination of the polymer in emulsion with the addition of the LMS system (i.e. condition f) in the method according to the invention leads to an efficient degradation of the PS.

**Example 2: Effect of the temperature on the LMS-mediated degradation of the PS synthesized in emulsion.** The graph in Fig.2 shows the value of Mp (determined by SEC) after treatment by the LMS (the initial Mp of the PS was 2,648,000 ± 73,000 g.mol$^{-1}$). The reaction mixtures contained PS (10 mg.mL$^{-1}$) in sodium phosphate buffer (50 mM, pH 6.0), laccase (2.1 U.mL$^{-1}$) and HBT (5 mM; 1% v/v residual DMSO). Reactions were incubated at varying temperatures and 200 rpm under magnetic stirring, under ambient air, during 48 h. Experiments were done at least in duplicate.

As shown in Fig. 2 the degradation of the PS is the more efficient between 30 to 45°, more particularly 35 to 40°C. Of note, for others vinyl polymers the efficient range of temperatures could be different.

**Example 3: Influence of the nature of the mediator on the LMS-mediated degradation of PS synthesized in emulsion.** The graph in Fig. 3 shows the value of Mp (determined by SEC) after treatment by the LMS (the initial Mp of the PS was 2,648,000 ± 73,000 g.mol$^{-1}$). The reaction mixtures contained PS (10 mg.mL$^{-1}$) in sodium phosphate buffer (50 mM, pH 6.0), laccase (2.1 U.mL$^{-1}$) and mediator (5 mM; 1% v/v residual DMSO), and were incubated at 40°C and 200 rpm,

under ambient air, for 48 h. Experiments were done at least in duplicate. 1: N-hydroxybenzotriazole (HBT). 2: 1-hydroxy7-azabenzotriazole. 3: 1-hydroxy-6-(trifluoromethyl)benzotriazole. 4: Violuric acid. 5: N-hydroxyphthalimide. 6: N-hydroxymaleimide. 7: N-hydroxy-5-norbornene-23-dicarboxylic acid imide. 8: N-hydroxysuccinimide. 9: N-Hydroxysulfosuccinimide sodium salt. 10: (2,2,6,6-Tetramethylpiperidin-1-yl)oxyl (TEMPO). 11: Syringaldehyde. 12: Acetovanillone. 13: Syringaldazine. 14: 2,2'-Azino-bis(3-ethylbenzothiazoline-6-sulfonic acid) diammonium salt (ABTS). 15: Promazine hydrochloride.

As shown in Fig. 3 various mediator have been used for the degradation of the PS polymer in emulsion. The most promissing mediators are HBT, violuric acid and also N-hydroxyphthalimide. In the absence of mediator, there is no degradation of the PS.

**Example 4: Effect of the pH on the LMS-mediated degradation of the PS synthesized in emulsion.** The graph in Fig. 4 shows the value of Mp (determined by SEC) after treatment by the LMS (the initial Mp of the PS was 1,481,000 $\pm$ 79,000g.mol$^{-1}$). Polystyrene was synthesized in water. The reaction mixtures contained PS (10 mg.mL$^{-1}$) in Britton-Robinson buffer (50 mM equimolar mixture), laccase (2.1 U.mL$^{-1}$) and HBT (5 mM; 1% v/v residual DMSO), and were incubated at 40°C and 200 rpm, under ambient air, for 48 h. Experiments were done at least in duplicate.

As shown in Fig. 4, the degradation of the PS is the most efficient for a pH comprised between 4 to 6 more particularly 5 to 5.5. For other vinyl polymers the optimum range of pH could be different.

**Example 5: LMS-mediated degradation of the PS synthesized in emulsion upon multiple additions of laccase, HBT and a vinylic monomer (herein styrene).** The graph in Fig. 5 shows the value of Mp (determined by SEC) and depolymerization rates after treatment by the LMS (the initial Mp of the PS was 194,000 $\pm$ 39,000 g.mol$^{-1}$). Experiments were carried out in an initial volume of 5 mL. In the initial stage, the reaction mixtures contained PS (10 mg.mL$^{-1}$) in sodium phosphate buffer (50 mM, pH 6.0), laccase (2.1 U.mL$^{-1}$) and HBT (5 mM; 1% v/v residual DMSO) and were incubated at 40°C and 200 rpm, under ambient air, for 21 days. Laccase (250 $\mu$L from a 42 U.mL$^{-1}$ stock solution), HBT (5 $\mu$L from a 5 M stock solution in DMSO) and styrene (5 $\mu$L from a 5 M stock solution in DMSO) were added twice a day from Monday to Friday for a total of 26 additions in 21 days. No styrene was added at the initial stage as the latex already contained residual styrene. Samples of 100 $\mu$L were taken to monitor the reaction.

As shown in Fig. 5 the multiple additions of a laccase and then a mediator could be more efficient for degrading the PS. As mentioned in the description adding a vinylic monomer could improve the degradation process. Sometimes no addition of vinylic monomer is needed, if there is a residual vinylic monomer already present in the vinyl polymer emulsion.

**Example 6 LMS-mediated degradation of re-emulsified PS.** The Mp of the initial PS latex not incubated was 1,944,000 $\pm$ 33,000 g.mol$^{-1}$ ("Initial latex"). See the experimental part for details about the re-emulsification process. The reaction mixtures contained PS (10 mg.mL$^{-1}$) in sodium phosphate buffer (50 mM, pH 6.0), laccase (2.1 U.mL$^{-1}$) and HBT (5 mM; 1% v/v residual DMSO), and styrene (0.5 $\mu$L, 8.7 mM, 9% compared to PS repeating unit, when specified) and were incubated at 40°C and 200 rpm, under ambient air, for 48 h. Experiments were done at least in triplicate. Lac: laccase. Sty: styrene. Results are presented in the table 2 below.

Table 2

| PS sample (added reactants) | Mn (g.mol$^{-1}$) | Mp (g.mol$^{-1}$) | Mw (g.mol$^{-1}$) | Đ |
|---|---|---|---|---|
| Initial PS latex (not incubated) | 414,000 ± 18,000 | 1,944,000 ± 33,000 | 1,412,000 ± 28,000 | 3.4 ± 0.1 |
| Initial PS latex (lac, HBT) | 65,000 ± 3,000 | 142,000 ± 14,000 | 201,000 ± 11,000 | 3.09 ± 0.01 |
| Re-emulsified PS in sodium phosphate (lac, HBT) | 210,000 ± 59,000 | 537,000 ± 1,000 | 526,000 ± 107,000 | 2.6 ± 0.5 |
| Re-emulsified PS in $H_2O$ (lac, HBT) | 167,000 ± 24,000 | 615,000 ± 69,000 | 631,000 ± 82,000 | 3.8 ± 0.2 |
| Re-emulsified PS in sodium phosphate (lac, HBT, sty) | 42,000 ± 6,000 | 74,000 ± 12,000 | 277,000 ± 109,000 | 6.2 ± 1.8 |

**Example 7: Effect of the addition of vinylic monomer on the LMS-mediated degradation of emulsified commercial PS.** The graph in Fig. 6 shows the value of Mp (determined by SEC) after treatment by the LMS. The initial Mp of the commercial PS was 220,000 $\pm$ 2,000 g.mol$^{-1}$. The reaction mixtures contained PS (10 mg.mL$^{-1}$) in sodium phosphate buffer (50 mM, pH 6.0), laccase (2.1 U.mL$^{-1}$), HBT (5 mM; 1% v/v residual DMSO), and styrene (0 to 5 $\mu$L, 0 to 87 mM, 0 to 91% compared to PS monomer repeating unit) and were incubated at 40°C and 200 rpm, under ambient air, for 48 h. Experiments were done at least in duplicate.

As shown in Fig. 6 the addition of a vinylic monomer (herein styrene) in the reaction mixture could impact the

degradation of the polymer when using the method according to the invention. On the contrary a high level of vinylic monomer in the reaction had a negative effect on the depolymerization rate.

**Example 8: Effect of the addition of vinylic monomer derivatives and oxidized styrene products on the LMS-mediated degradation of emulsified commercial PS.** The initial Mp of the commercial PS powder was 220,000 ± 2,000 g.mol$^{-1}$. The reaction mixtures contained PS (10 mg.mL$^{-1}$) in sodium phosphate buffer (50 mM, pH 6.0), laccase (2.1 U.mL$^{-1}$), HBT (5 mM), and an additive (see table; 5 mM), and were incubated at 40°C and 200 rpm, under ambient air, for 48 h. Note that the addition of HBT and additive (both prepared in DMSO) results in 2% residual DMSO in the final mixture. In the experiment "no additive", the additive was replaced by DMSO. Experiments were done at least in duplicate. Results are shown in the table 3 below.

Table 3.

| Additive | Mn (g.mol$^{-1}$) | Mp (g.mol$^{-1}$) | Mw (g.mol$^{-1}$) | Đ |
|---|---|---|---|---|
| PS powder (not incubated) | 99,000 ± 10,000 | 220,000 ± 2,000 | 200,000 ± 1,000 | 2.2 ± 0.2 |
| No additive | 73,000 ± 4,000 | 181,000 ± 5,000 | 177,000 ± 10,000 | 2.1 ± 0.4 |
| **Styrene** | **51,000 ± 2,000** | **143,000 ± 2,000** | **127,000 ± 3,000** | **2.5 ± 0.1** |
| 4-styrene sulfonic acid | 75,000 ± 1,000 | 183,000 ± 2,000 | 169,000 ± 2,000 | 2.7 ± 0.6 |
| **α-methylstyrene** | **45,000 ± 3,000** | **147,000 ± 4,000** | **119,000 ± 1,000** | **2.6 ± 0.2** |
| Styrene oxide | 67,000 ± 8,000 | 179,400 ± 300 | 162,000 ± 4,000 | 2.5 ± 0.2 |
| Benzaldehyde | 80,000 ± 5,000 | 179,000 ± 8,000 | 167,000 ± 7,000 | 2.07 ± 0.04 |

The vinylic monomer used in addition to the reaction mixture could be the one used for the synthesis of the vinyl polymer or another one. In the example 8, the α-methylstyrene is as efficient for the degradation of the PS than the styrene.

**SEQUENCE LISTING**

SEQ_ID NO: 1:

AIGPAASLVVANAPVSPDGFLRDAIVVNGVFPSPLITGKKGDRFQLNVVDTLTNHTM
LKSTSIHWHGFFQAGTNWADGPAFVNQCPIASGHSFLYDFHVPDQAGTFWYHSHLSTQ
YCDGLRGPFVVYDPKDPHASRYDVDNESTVITLTDWYHTAARLGPRFPLGADATLINGL
GRSASTPTAALAVINVQHGKRYRFRLVSISCDPNYTFSIDGHNLTVIEVDGINSQPLLVDSI
QIFAAQRYSFVLNANQTVGNYWIRANPNFGTVGFAGGINSAILRYQGAPVAEPTTTQTTS
VIPLIETNLHPLARMPVPGSPTPGGVDKALNLAFNFNGTNFFINNASFTPPTVPVLLQILSG
AQTAQDLLPAGSVYPLPAHSTIEITLPATALAPGAPHPFHLHGHAFAVVRSAGSTTYNYN
DPIFRDVVSTGTPAAGDNVTIRFQTDNPGPWFLHCHIDFHLEAGFAIVFAEDVADVKAAN
PVPKAWSDLCPIYDGLSEANQ

**Claims**

1. A method for degrading a vinyl polymer having an initial molar mass in order to form at least one degradation product having a final molar mass lower than the initial molar mass, the method comprising :

a) providing a water-based emulsion of the vinyl polymer;

b) mixing the water-based emulsion with at least one enzyme-mediator system to obtain a reaction mixture,

said at least one enzyme-mediator system comprising:

- at least one multi-copper oxidase chosen among a laccase, a laccase-ferroxidase, a laccase-like multi-copper oxidase or a mixture thereof, and
- at least one respective mediator,

said at least one multi-copper oxidase and said at least one respective mediator being:

- mixed sequentially with the water-based emulsion, or
- provided as a pre-mix preserved under anaerobic conditions, until being mixed with the water-based emulsion;

c) stirring the reaction mixture under an atmosphere comprising dioxygen; and
d) recovering the at least one degradation product of the vinyl polymer.

**2.** The method according to claim 1, in which the vinyl polymer is obtained by polymerization or copolymerization of vinylic monomers of formulae

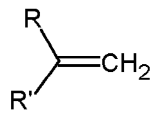

wherein

R is independently selected from H, $CH_3$ or $CF_3$,
R' is independently selected from:

- an atom chosen among H, F, Cl, Br, or I,
- a linear or branched alkyl from 1 to 10 carbon optionally substituted by one or more -COOH group,
- a group -COOH,
- a group -COOR" wherein R" is a linear or branched $C_1$-$C_{10}$ alkyl group optionally substituted by a group OH,
- an optionally substituted benzyl group or a substituted phenyl group where said substituents are selected from H, F, Cl, Br, I or a $C_1$-$C_6$ linear or a branched alkyl,
- O-$C_1$-$C_6$alkyl group or a group-COH, or a group -COOH, or a group -COOR",
- a group -$NH_2$, or a group -O-COOR" or a group -CN, or a group -B $(OH)_2$,
- a $C_1$-$C_6$ heteroaryl group wherein said heteroaryl group comprises one, two or three N atoms or a S atom,
- a group -CO-NH2, -CO-NHR, -CO-N$(R)_2$,
- a dimethoxysilane or trimethoxysilane group.

**3.** The method according to claim 1 or 2, in which the vinyl polymer is chosen among polyethylene, polypropylene, polystyrene, poly(vinyl chloride), poly(alyl) methacrylate, poly(alkyl methacrylate) .

**4.** The method according to any one of claims 1 to 3, in which the vinyl polymer has an initial degree of polymerization (DP) of at least 10, preferably at least 100, more preferably at least 500, notably at least 1,000, notably at least 10,000, notably at least 100,000.

**5.** The method according to any one of claims 1 to 4, further comprising, before step a), a step 1) comprising:

- providing the vinyl polymer and
- forming the water-based emulsion of the vinyl polymer by mixing the vinyl polymer with an interfacial agent.

**6.** The method according to any one of claims 1 to 5, in which the vinyl polymer has an initial concentration in the reaction mixture comprised from 0.5 to 200.0 g/L, for example from 5.0 to 100.0 g/L, from 5.0 to 80.0 g/L, from 10.0 to 70. g/L, from 20.0 to 60.0 g/L or from 30.0 to 40.0 g/L, or from 5 to 15 g/L.

**7.** The method according to any one of claims 1 to 6, in which the at least one multi-copper oxidase is a multi-copper oxidase which is extracted from a microorganism chosen among fungal species belonging to the *Trametes* genera.

**8.** The method according to any one of claims 1 to 7, in which the at least one multi-copper oxidase has an initial concentration in the reaction mixture comprised from 0.1 to 40.0 enzyme units per mL of reaction mixture (U/mL), preferably from 0.5 to 30 U/mL, more preferably from 1.0 to 20.0 U/mL, more still more preferably from 1.0 to 10.0 U/mL, notably equal to 2.0 U/mL.

**9.** The method according to any one of claims 1 to 8, in which the at least one multi-copper oxidase is a high-redox potential enzyme having a standard redox potential of at least 0.600 V versus normal hydrogen electrode (NHE), preferably at least 0.700 V, even more preferably at least 0.750 V.

**10.** The method according to any one of claims 1 to 9, in which the mediator is chosen from the group consisting of 1-hydroxybenzotriazole (HBT) and its derivatives, N-hydroxyacetanilide (NHA), N-acetyl-N-phenylhydroxylamine (NEIAA), 3- hydroxy 1,2,3-benzotriazin-4(3H)-one (HBTO), N-hydroxyphtalimide, (2,2,6,6-tetramethylpiperidin-1-yl)oxyl (TEMPO), violuric acid, promazine and phenolic compounds such as vanilline and acetovanillone or a mixture thereof.

**11.** The method according to any one of claims 1 to 10, in which the mediator has an initial concentration in the reaction mixture comprised from 1.0 to 100.0 millimole per liter (mmol/L), preferably comprised from 1.0 to 50.0 mmol/L, more preferably from 1.0 to 30.0 mmol/L, notably from 3.0 to 25.0 mmol/L.

**12.** The method according to any one of claims 1 to 11, in which the reaction mixture has a pH comprised from 3.5 to 7.0, more preferably from 4.0 to 7.0, more preferably from 5.0 to 7.0 and even more preferably from 6.0 to 7.0.

**13.** The method according to any one of claims 1 to 12, further comprising: adding at least one additional vinylic monomer to the reaction mixture.

**14.** The method according to claim 13, in which said at least one additional vinylic monomer has an initial concentration in the reaction mixture comprised from 2 to 300 millimolar, from 2 to 200 millimolar, from 2 to 100 millimolar, from 2 to 50 millimolar, from 2 to 25 millimolar, from 2 to 10 millimolar, from 2 to 5 millimolar.

**15.** A kit-of-parts for degrading a vinyl polymer having an initial molar mass in order to form at least one degradation product having a final molar mass lower than the initial molar mass, the kit-of-parts comprising:

a) the water-based emulsion of said vinyl polymer;
b) at least one enzyme-mediator system comprising:

- at least one multi-copper oxidase chosen among a laccase, a laccase-ferroxidase, a laccase-like multi-copper oxidase or a mixture thereof;
- at least one respective mediator; and
- optionally, at least one additional vinylic monomer,

wherein the multi-copper oxidase and the mediator are either intended to be mixed separately with the water-based emulsion or provided as a pre-mix preserved under anaerobic conditions, until being mixed with the water-based emulsion.

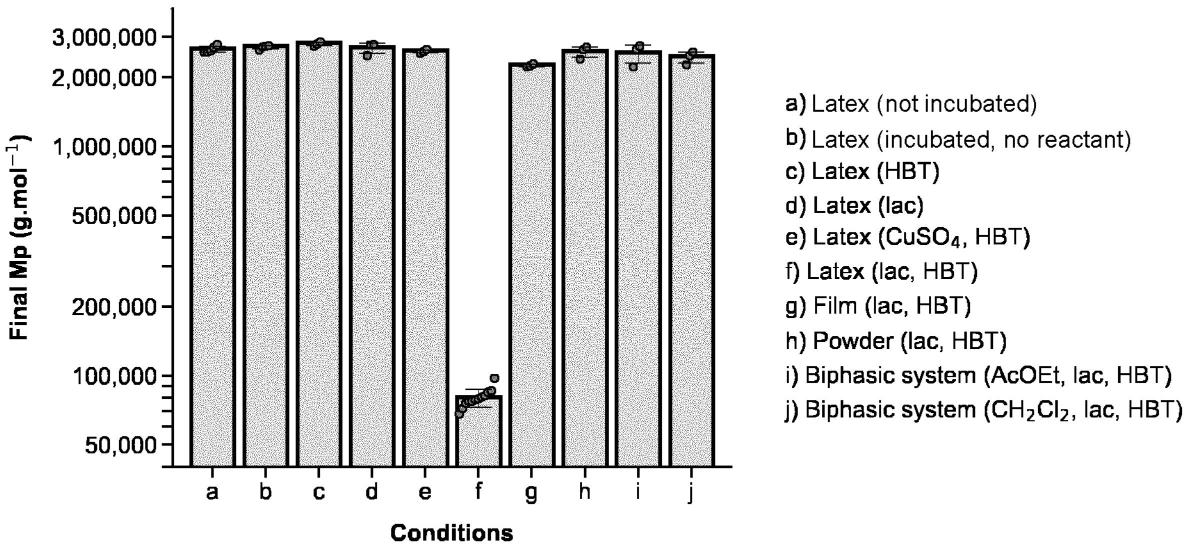
3,000,000
2,000,000
1,000,000
500,000
200,000
100,000
50,000
Final Mp (g.mol−1)
a
b
c
d
e
f
g
h
i
j
Conditions
a) Latex (not incubated)
b) Latex (incubated, no reactant)
c) Latex (HBT)
d) Latex (lac)
e) Latex (CuSO4, HBT)
f) Latex (lac, HBT)
g) Film (lac, HBT)
h) Powder (lac, HBT)
i) Biphasic system (AcOEt, lac, HBT)
j) Biphasic system (CH2Cl2, lac, HBT)

Fig.1

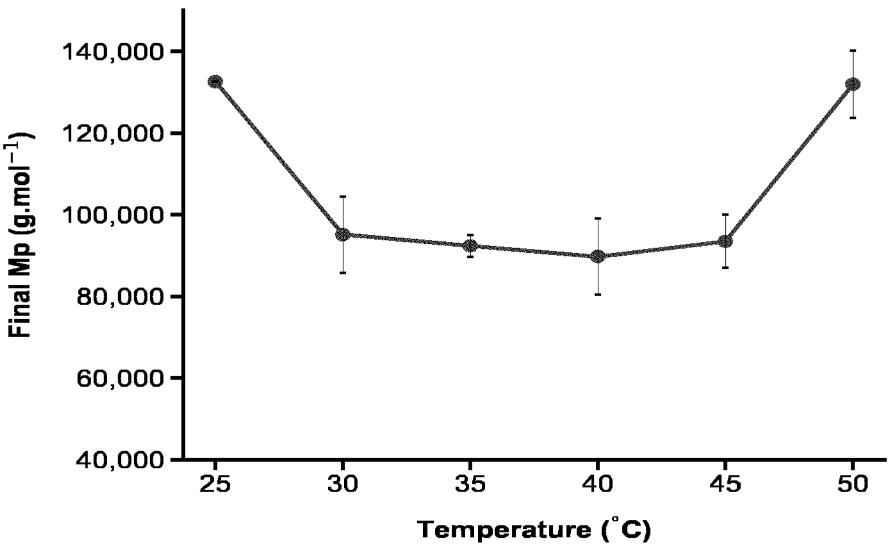
140,000
120,000
100,000
80,000
60,000
40,000
Final Mp (g.mol−1)
25
30
35
40
45
50
Temperature (°C)

Fig. 2

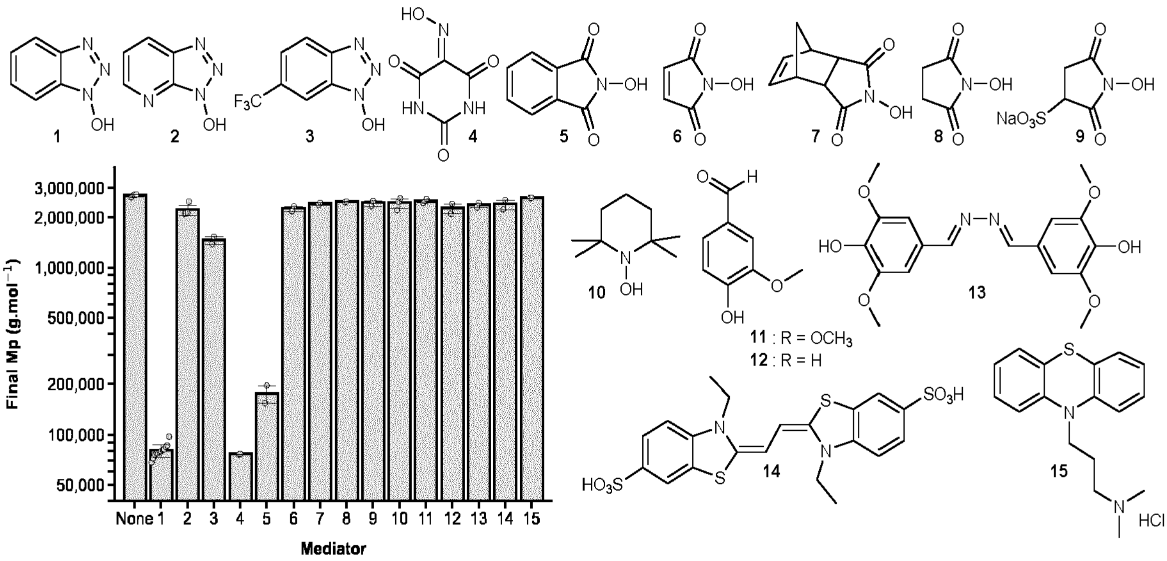
1
2
3
4
5
6
7
8
9
10
11 : R = $OCH_3$
12 : R = H
13
14
15
Final Mp ($g.mol^{-1}$)
3,000,000
2,000,000
1,000,000
500,000
200,000
100,000
50,000
None 1 2 3 4 5 6 7 8 9 10 11 12 13 14 15
Mediator

Fig. 3

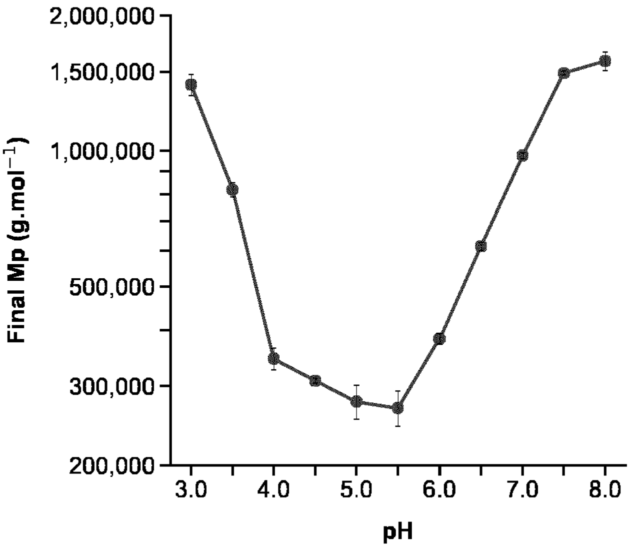
Final Mp ($g.mol^{-1}$)
2,000,000
1,500,000
1,000,000
500,000
300,000
200,000
3.0
4.0
5.0
6.0
7.0
8.0
pH

Fig. 4

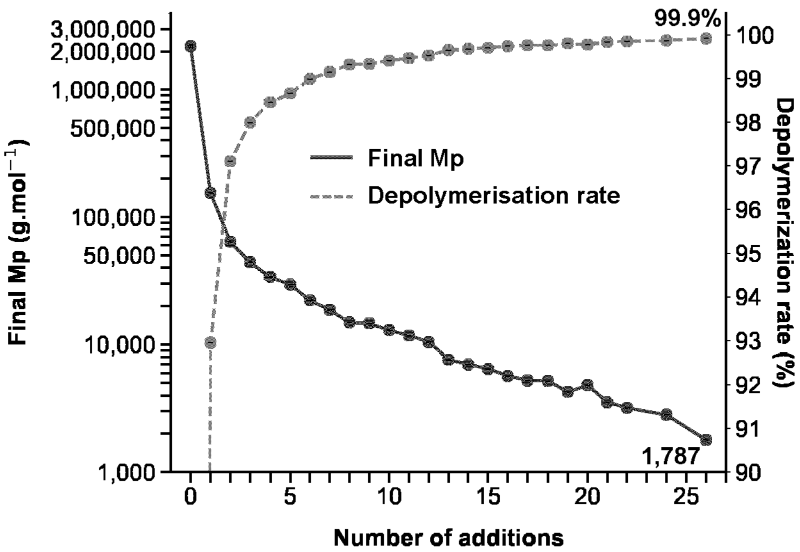
3,000,000
2,000,000
1,000,000
500,000
100,000
50,000
10,000
1,000
Final Mp (g.mol$^{-1}$)
99.9%
100
99
98
97
96
95
94
93
92
91
90
Depolymerization rate (%)
Final Mp
Depolymerisation rate
1,787
0
5
10
15
20
25
Number of additions

Fig. 5

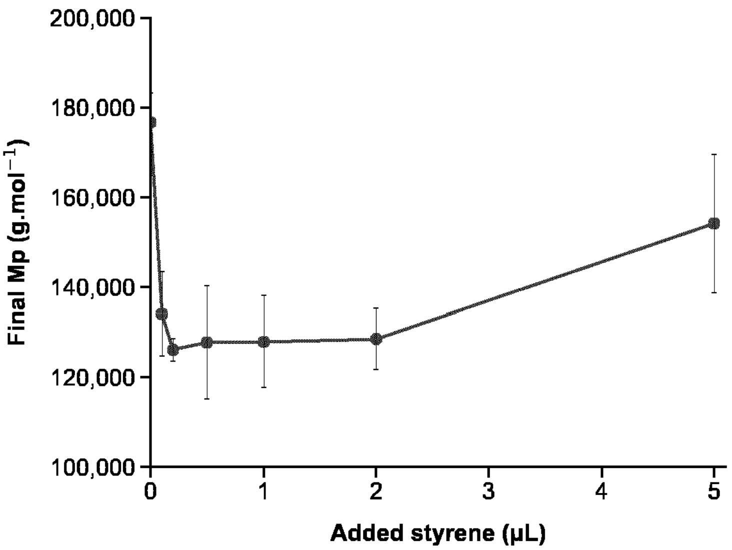
200,000
180,000
160,000
140,000
120,000
100,000
Final Mp (g.mol$^{-1}$)
0
1
2
3
4
5
Added styrene (µL)

Fig. 6

Europäisches Patentamt
European Patent Office
Office européen des brevets

# EUROPEAN SEARCH REPORT

Application Number
EP 24 30 6895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRUEGER MARTIN C. ET AL: "Potential of Wood-Rotting Fungi to Attack Polystyrene Sulfonate and Its Depolymerisation by Gloeophyllum trabeum via Hydroquinone-Driven Fenton Chemistry", PLOS ONE, vol. 10, no. 7, 6 July 2015 (2015-07-06), page e0131773, XP093288440, US ISSN: 1932-6203, DOI: 10.1371/journal.pone.0131773 | 1-4, 6-12,15 | INV. C08J11/10 |
| Y | * Title, abstract, pages 11-12 section | 9 | |
| A | \`degradation of PSS by laccase-mediator systems\`; table 2 * | 13,14 | |
| | ----- | | |
| X | US 2016/280881 A1 (BOISART CÉDRIC [FR] ET AL) 29 September 2016 (2016-09-29) | 1-12,15 | |
| A | * Title, abstract; paragraphs [0002], [0051], [0054], [0060], [0063], [0075], [0085]; claims 22, 31, 34; example 4 * | 13,14 | |
| | ----- | | |
| | -/-- | | |

| TECHNICAL FIELDS SEARCHED (IPC) |
|---|
| C08J |

The present search report has been drawn up for all claims

| Place of search | Date of completion of the search | Examiner |
|---|---|---|
| The Hague | 24 June 2025 | Mooibroek, Tiddo |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 30 6895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mikihito Fujisawa ET AL: "Degradation of Polyethylene and Nylon-66 by the Laccase-Mediator System", Journal of Polymers and the Environment, 1 July 2001 (2001-07-01), pages 103-108, XP055293894, New York DOI: 10.1023/A:1020472426516 Retrieved from the Internet: URL:http://download.springer.com/static/pdf/515/art%3A10.1023%2FA%3A1020472426516.pdf?originUrl=http://link.springer.com/article/10.1023/A:1020472426516&token2=exp=1470402851~acl=/static/pdf/515/art%253A10.1023%252FA%253A1020472426516.pdf?originUrl=http%3A%2F%2Flink.springer.com%2Farticle%2F10.1023%2FA% | 1-4, 6-12,15 | |
| A | * Title, abstract, page 103, right column, page 107, left, lines 3-16; figure 4; table 1 * | 13,14 | |
| | ----- | | TECHNICAL FIELDS SEARCHED (IPC) |
| X | JP 2003 128835 A (ASAHI KASEI CORP) 8 May 2003 (2003-05-08) | 1-4,6,8, 10-12,15 | |
| A | * Title, abstract; paragraph [0017]; claims 1, 2 * | 13,14 | |
| | ----- | | |
| X | CN 116 063 734 A (UNIV JIANGNAN) 5 May 2023 (2023-05-05) | 1-4,6,8, 10-12,15 | |
| A | * Title, abstract; paragraph [0004]; claim 1; figure 1; table 1 * | 13,14 | |
| | ----- | | |
| | -/-- | | |

The present search report has been drawn up for all claims

| Place of search | Date of completion of the search | Examiner |
|---|---|---|
| The Hague | 24 June 2025 | Mooibroek, Tiddo |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 30 6895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | INDERTHAL HEDDA ET AL: "Non-Hydrolyzable Plastics - An Interdisciplinary Look at Plastic Bio-Oxidation", TRENDS IN BIOTECHNOLOGY, ELSEVIER PUBLICATIONS, CAMBRIDGE, GB, vol. 39, no. 1, 30 May 2020 (2020-05-30), pages 12-23, XP086412524, ISSN: 0167-7799, DOI: 10.1016/J.TIBTECH.2020.05.004 [retrieved on 2020-05-30] | 9 | |
| A | * page 14, right-hand side * ----- | 13,14 | |

TECHNICAL FIELDS SEARCHED (IPC)

The present search report has been drawn up for all claims

| Place of search | Date of completion of the search | Examiner |
|---|---|---|
| The Hague | 24 June 2025 | Mooibroek, Tiddo |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 30 6895

This annex lists the patent family members relating to the patent documents cited in the above-mentioned European search report. The members are as contained in the European Patent Office EDP file on The European Patent Office is in no way liable for these particulars which are merely given for the purpose of information.

24-06-2025

| Patent document cited in search report | Publication date | Patent family member(s) | Publication date |
| --- | --- | --- | --- |
| US 2016280881 A1 | 29-09-2016 | EP 3065890 A2 | 14-09-2016 |
| | | US 2016280881 A1 | 29-09-2016 |
| | | WO 2015067619 A2 | 14-05-2015 |
| JP 2003128835 A | 08-05-2003 | NONE | |
| CN 116063734 A | 05-05-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **Y. ZHANG et al.** Biodegradation of polyethylene and polystyrene: From microbial deterioration to enzyme discovery,. *Biotechnology Advances*, 2022, vol. 60, 107991
- **A. ZERVA et al.** Investigation of Abortiporus biennis lignocellulolytic toolbox, and the role of laccases in polystyrene degradation. *Chemosphere*, 2023, vol. 312, 137338